# EUROPEAN PATENT APPLICATION

(11) **EP 1 731 642 A1**
(43) Date of publication of application: **13.12.2006**
(21) Application number: 04710527.5
(22) Date of filing: 12.02.2004
(51) Int. Cl.: D03D 15/02, D03D 15/00, D06M 23/08, D06M 11/83, B32B 5/02, B32B 27/20, D06Q 1/10

(54) **FABRIC AND TEXTILE PRODUCT**

(71) Applicant: Nippon Wishborn Corporation, Chuo-ku, Osaka-shi Osaka 5400046 (JP)
(72) Inventor: SHIMAZAKI, Sataro, Osaka-shi, Osaka 540-0038 (JP)
(74) Representative: Benedum, Ulrich Max
(86) International application number: PCT/JP2004/001504
(87) International publication number: WO 2005/078177

(57) **Abstract**

Fabric (A) (Fig. 1) comprising first laminated yarns (1) and second laminated yarns (2). The first laminated yarns (1) are obtained by first forming a metal layer on one surface of a synthetic resin film by vapor deposition, bonding synthetic resin films provided with metal layers to each other so that the metal layers come inside so as to produce a sandwich structure and cutting the sandwich structure into yarns. The second laminated yarns (2) are produced in the same manner as for the first laminated yarns (1) except that the metal layers thereof consist of a metal having a potential difference from the metal constituting the metal layers of the first laminated yarns (1). Fabric (B) (Fig. 3) as another embodiment is one comprising raw yarns having, attached thereto, a first laminated material and second laminated material obtained by pulverizing the two sandwich structures used in the production of the fabric (A).

## Description

### Technical Field

This invention relates to fabric having safe and semi-permanent insect repelling, antibacterial and anti-molding effects which can decompose and purify harmful substances and generate minus ions, as well as a fiber product using this fabric as a material.

### Background Art

Fiber products where certain effective components are kneaded into raw fiber during the manufacture of the raw fiber and fiber products to which such effective components are attached during a dyeing process, for example, have been developed and used as conventional fiber products having insect repelling and antibacterial effects, as well as anti-molding effects.

In addition, fiber products using laminated yarn or laminated bodies having a sandwich structure in which an antibacterial metal is sandwiched between synthetic resin films (see, for example, Japanese Unexamined Patent Publication No. 2001-49541, pamphlet of International Publication No. 01/98567 and pamphlet of International Publication No. 01/83880) have been developed and used.

Furthermore, fiber products using laminated yarn or laminated bodies having a sandwich structure in which a number of metals having a difference in potential are sandwiched between synthetic resin films (see, for example, Japanese Unexamined Patent Publication No. 2003-328237) have also been developed.

It is believed that minus ions have effects of making people relax, and conventional fiber products to which a fine pulverized powder of charcoal or tourmaline for generating minus ions is attached or applied, or with which such a powder is mixed, have also been developed and used (see, for example, Japanese Unexamined Patent Publication No. 2000-73254).

However, these fiber products have the following problems.

First, though fiber products using laminated yarn or laminated bodies are effective against bacteria, viruses and certain molds, such as Trichophyton, there is a problem, such that complete suppression of multiplication of Aspergillus niger, red mold and blue mold, which have a strong vitality, effects of repelling of ticks, fleas and insects, and suppression of multiplication of large-scale fungi and plankton cannot be expected.

In addition, a number of metals are vapor deposited in the manufacture of laminated yarn and laminated bodies including a number of metals for creating a potential difference, and therefore, there is a problem such that the cost of manufacture becomes high.

Furthermore, external stimulation, such as washing, causing charcoal or tourmaline to come off from fiber products using charcoal or tourmaline, and therefore, there is a problem such that the performance thereof cannot be sustained over a long period of time.

In addition, no fiber products having insect repelling, antibacterial and anti-molding effects, as well as the ability to generate minus ions, have been developed so far.

Therefore, an object of this invention is to provide fabric having insect repelling, antibacterial and anti-molding effects which can decompose and purify harmful substances and generate minus ions, where these functions do not deteriorate even when stimulation, such as washing or vibration, is provided, and thus, the feel, aesthetics and sense of effectiveness when used by a user are not lost, as well as fiber products in a portion of which this fabric is used as a material.

### Disclosure of the Invention

A first fabric according to this invention is characterized by including as a portion of raw yarn first laminated yarn formed by manufacturing a sandwich structure where a metal layer is vapor deposited on one surface of synthetic resin films and the synthetic resin films on which a metal layer has been vapor deposited in the same manner are bonded together in such a manner that the metal layers face the inside, and cutting the sandwich structure into yarn, and second laminated yarn formed by manufacturing a sandwich structure where a metal layer having a potential that is different from that of the metal that forms the metal layer of the first laminated yarn is vapor deposited on one surface of synthetic resin films and the synthetic resin films on which a metal layer has been vapor deposited are bonded together in such a manner that the metal layers face the inside, and cutting the sandwich structure into yarn.

In addition, a second fabric according to this invention is characterized in that the first laminated yarn and the second laminated yarn are arranged alternately.

In addition, a third fabric according to this invention is characterized in that first laminated bodies formed by manufacturing a sandwich structure where a metal layer is vapor deposited on one surface of synthetic resin films and the synthetic resin films on which a metal layer has been vapor deposited in the same manner are bonded together in such a manner that the metal layers face the inside, and pulverizing the sandwich structure to pieces, and second laminated bodies formed by manufacturing a sandwich structure where a metal layer of metal having a potential that is different from that of the metal that forms the metal layer of the first laminated bodies is vapor deposited on one surface of synthetic resin films and the synthetic resin films on which a metal layer has been vapor deposited are bonded together in such a manner that the metal layers face the inside, and pulverizing the sandwich structure to pieces are attached to fabric.

Furthermore, a fiber product according to this invention is characterized in that any of the above described fabrics is used as a portion of the material.

In this manner, in fabric and a fiber product according to this invention, there is a difference in potential between the two types of laminated yarn or laminated bodies which include different types of metal; that is to say, a so-called battery system is created, and thereby, a microscopic current flows so as to provide working effects of repelling insects, counteracting molding and bacteria, and generating minus ions.

In addition, the metal layers are protected by the synthetic resin films, and only the exposed surface is rubbed, and therefore, even when fabric and fiber products having laminated yarn or laminated bodies as a component are repeatedly washed, or a bleacher is used on these, insect repelling, anti-molding and antibacterial effects, as well as effects of generating minus ions, are not lost, and the appearance of the fabric and fiber products having laminated yarn or laminated bodies as a component does not worsen due to blackening of the metal layers.

### Brief Description of the Drawings

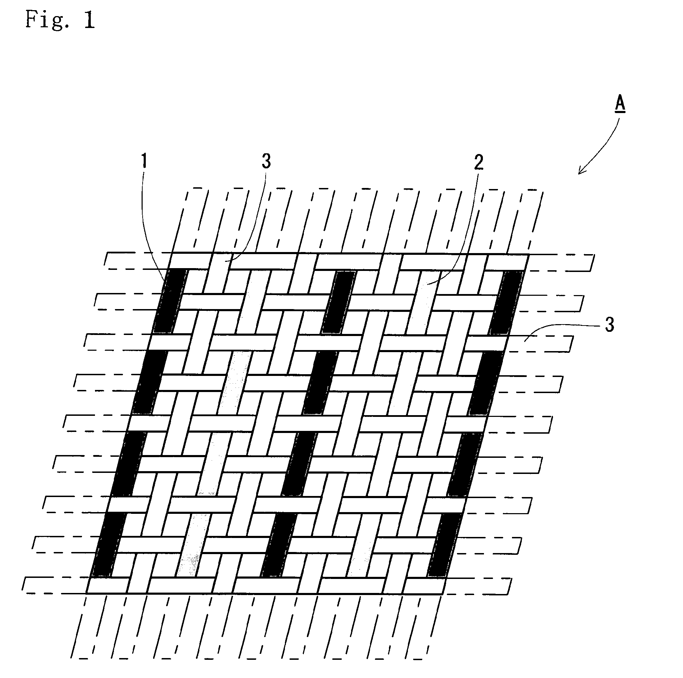

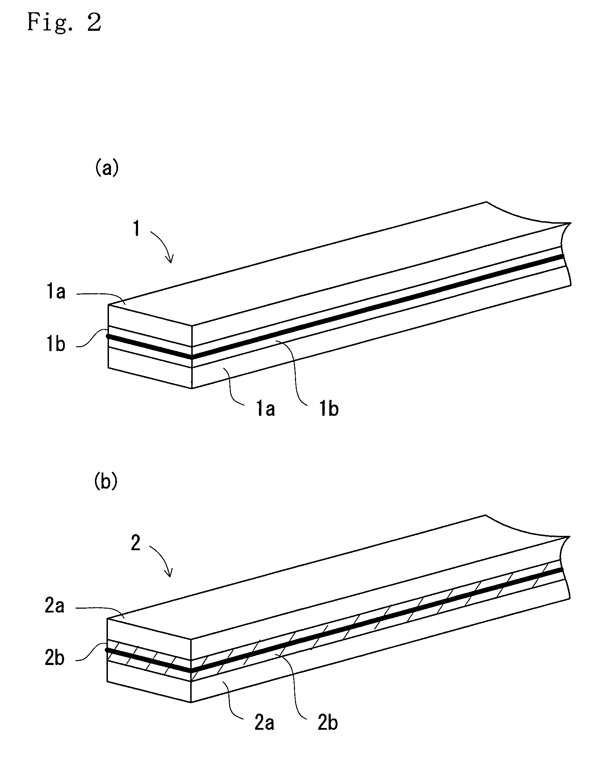

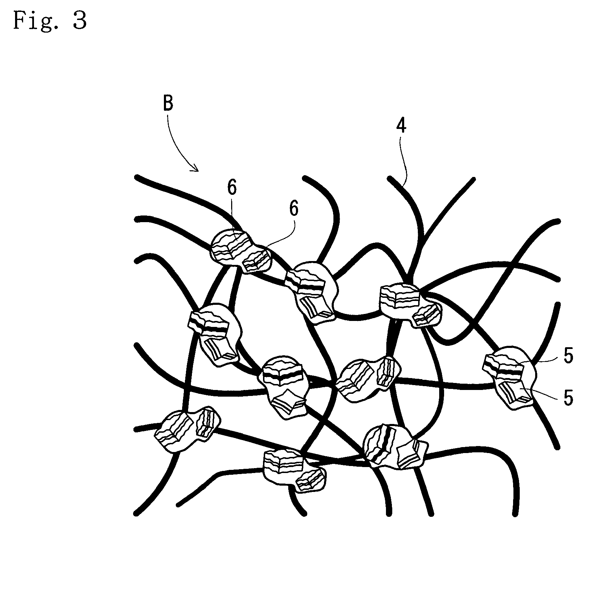

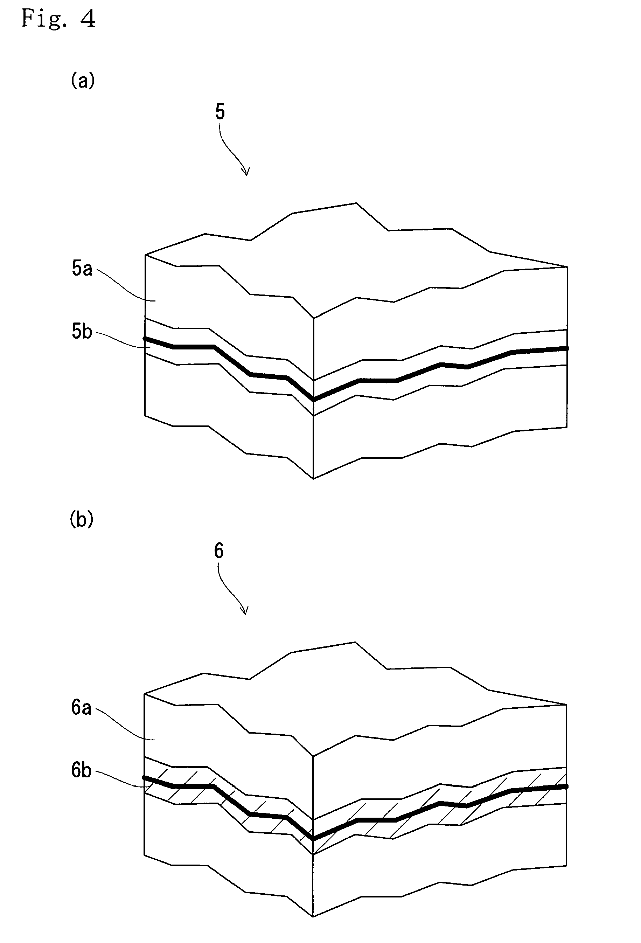

Fig. 1 is an enlarged diagram of a portion of fabric according to this invention; Figs. 2(a) and 2(b) are diagrams showing the configuration of the laminated yarn shown in Fig. 1; Fig. 2 (a) is a diagram showing the configuration of the first laminated yarn and Fig. 2(b) is a diagram showing the configuration of the second laminated yarn; Fig. 3 is an enlarged diagram showing a portion of another fabric according to this invention; and Figs. 4 (a) and 4 (b) are diagrams showing the configuration of a laminated body which is a component of the fabric shown in Fig. 3; Fig. 4 (a) is a diagram showing the configuration of a first laminated body, and Fig. 4(b) is a diagram showing the configuration of a second laminated body.

### Best Mode for Carrying Out the Invention

In the following, the embodiments of this invention are described in reference to the drawings.

First, Fig. 1 is an enlarged diagram showing a portion of a yarn-dyed fabric (fabric A), which is one type of fabric according to this invention. As shown in this figure, fabric A is a plain fabric where first laminated yarn 1, second laminated yarn 2 and yarn 3 are woven in a consistent arrangement, in the order: first laminated yarn 1/yarn 3/second laminated yarn 2/yarn 3/first laminated yarn 1/yarn 3/second laminated yarn 2 .... Here, the distance between first laminated yarn 1 and second laminated yarn 2 is approximately 1 mm to 20 mm, but approximately 2 mm to 15 mm is preferable, taking the expected effects and functions against the price of the product into consideration.

Figs. 2 (a) and 2(b) are enlarged diagrams showing first laminated yarn 1 and second laminated yarn 2, and these laminated yarns are manufactured in the following procedure. Here, though a case were laminated yarn 1 is manufactured is described in the following, the procedure for manufacturing laminated yarn 1 and second laminated yarn 2 are the same, except for the below described difference in the metal layer, and therefore, except for this portion, the description of the procedure for manufacturing laminated yarn 2 is omitted.

First, a metal is deposited on a synthetic resin film 1a in accordance with a vapor deposition method, an ion deposition method or the like, so that a metal layer 1b is provided. Next, synthetic resin films 1a on which metal layer 1b is vapor deposited are bonded together with an adhesive in such a manner that metal layers 1b face the inside, so that a sandwich structure in which metal layers 1b are sandwiched between synthetic resin films 1a is manufactured. Finally, the sandwich structure is cut in the longitudinal direction, so that laminated yarn 1 is completed. Here, the width of laminated yarn 1 should be approximately 100 µm to 500 µm, for economical reasons and taking the feel to the skin and the like into consideration, and it is preferable for it to be 150 µm to 250 µm, taking the texture of the fabric and ease of work during the shredding process into consideration.

Here, synthetic resin film 1a is a film made of polyester, polyamide, polyolefin or the like, and the thickness thereof is approximately 4 µm to 50 µm, and it is preferable for the thickness to be approximately 6 µm to 12 µm, taking the flexibility of the product and the like into consideration.

In addition, it is possible for the metal that forms metal layers 1b and 2b to be a metal such as aluminum, magnesium, tin, iron, copper, silver or gold, and various types of metal may be used, as long as there is a difference in potential between metal layer 1b and metal layer 2b on the second laminated yarn. Here, as for combinations of metal layer 1b and metal layer 2b, combinations such as aluminum and tin, magnesium and tin, tin and silver, iron and copper or aluminum and gold can be cited as examples.

In addition, though as the adhesive, a polyurethane based adhesive, a polyester based adhesive and a polyacryl based adhesive are possible, a polyurethane based or polyester based adhesive having a low level of formalin is preferable, taking the safety of the fabric into consideration. Here, for laminated yarn 1 and 2, a synthetic resin film where a metal film is coated on one side and a synthetic resin is coated on the other side may be used, depending on the durability required for the fabric or the product.

Fig. 3 is an enlarged diagram showing a portion of a span bonded unwoven cloth (fabric B) according to this invention, and fabric B is gained by screen printing laminated bodies 5 or laminated bodies 6 which are mixed with an adhesive on the surface of the unwoven cloth made of fibers 4 in dot form. Here, in Fig. 3, though only laminated bodies 5 or laminated bodies 6 are included in the screen printed dots, the dots may include both laminated bodies 5 and laminated bodies 6. In addition, as for the form in which the mixture is screen printed, line form may be used in addition to dot form, or the entire surface of the unwoven cloth may be printed.

In addition, fibers 4 are natural fibers or synthetic fibers and the above described adhesive may be a polyvinyl alcohol based resin, a polyacryl based resin, a polyurethane based resin, a polyester based resin or the like, and these resins may be physically foamed for use, or the above described resins may be mixed with a well known chemical foaming agent which is compatible with the resin so as to be foamed. As a result, the amount of resin used can be reduced, and at the same time, the laminated bodies can be further exposed, and thus the antibacterial and anti-molding functions thereof can be enhanced.

Figs. 4(a) and 4(b) are diagrams schematically showing the structure of a laminated body 5 and a laminated body 6, and as shown in these figures, laminated body 5 and laminated body 6 have a sandwich structure where metal layers 5b and 6b are sandwiched between synthetic resin films 5a and 6a, respectively.

This laminated body 5 and laminated body 6 are manufactured by manufacturing a sandwich structure in accordance with the same method as that for laminated yarn 1 and cutting and pulverizing the structure in both the longitudinal and lateral direction. Here, as for the size to which laminated bodies 5 and laminated bodies 6 are cut, approximately square with sides of 0.1 mm to 0. 5 mm is preferable. Furthermore, the type of material which form synthetic resin films 5a and 6a, as well as metal layers 5b and 6b, as well as the thickness of the material, are the same as when laminated yarn 1 and laminated yarn 2 are formed.

In fabric A and fabric B formed in this manner, there is caused a difference in potential between laminated yarn 1 and laminated yarn 2 or laminated bodies 5 and laminated bodies 6 because of moisture that is included in products using these, moisture coming from the environment in life or due to sweat, or artificial moisture from the kitchen, bathroom, washroom, laundry and the like, and thus, the above described functions and effects are provided by a microscopic current generated by this difference in potential. In addition, though the sides of metal layers 1b, 2b, 5b and 6b are exposed to the outside, and therefore, these oxidized portions may come off when adjacent fibers oxidized or chlorinated rub against each other, and even if they do not come off, they are not visible to the eye. In addition, the portions other than the sides of metal layers 1b, 2b, 5b and 6b are protected by synthetic resin films 1a, 2a, 5a and 6a, and therefore, are not oxidized or chlorinated. Therefore, even when the product is repeatedly washed or a bleacher is used, the antibacterial and anti-molding effects and the effects of generating minus ions are not lost.

Next, various tests were carried out on the fabrics according to this invention which were manufactured in order to describe this invention in further detail.

### (1) Manufacture of Laminated Yarn

A metal layer of aluminum having a thickness of 50 nm was vapor deposited on a polyester film (made by Toray Industries, Inc.) having a thickness of 12 µm in accordance with a vapor deposition method. Next, polyester films on which a metal layer as that described above was vapor deposited were bonded together in such a manner that the metal layers thereof face the inside using a polyester based adhesive, and thus, a sandwich structure was manufactured. Finally, the sandwich structure is cut in the longitudinal direction into pieces of a width of 150 µm, and thus, first laminated yarn was manufactured. In addition, tin was vapor deposited instead of aluminum, and thereby, second laminated yarn was manufactured.

### (2) Manufacture of Fabric

Next, one hundred pieces of cotton yarn having a yarn count of 40 were aligned at equal intervals within one inch so as to be used as a warp in an automatic weaving machine. Then, first laminated yarn, cotton yarn having a yarn count of 40, second laminated yarn, cotton yarn having a yarn count of 40, first laminated yarn ... were interwoven as a weft in this order, in such a manner that the total number of pieces of first laminated yarn, cotton yarn having a yarn count of 40 and second laminated yarn was 50 within one inch and the intervals between the first laminated yarn and the second laminated yarn were 4 mm, and thus, a plain fabric (Example 1) was manufactured. Here, two pieces of polyester filament yarn of 20 deniers were twisted at 200 twists/m in opposite directions, clockwise and counterclockwise, in the laminated yarn at this time.

### (3) Test for Antibacterial Properties

Furthermore, Example 1 was washed ten times (using a JAFET standard detergent) in accordance with JIS L027 103, and after that, a test for antibacterial properties was carried out in accordance with a flask shaking method. Here, pneumobacilli were used as the test bacterium. As a result, it was found that the effective ratio of reduction in bacteria was 84.6%, and thus, excellent antibacterial properties were proven.

In addition, Example 1 was washed ten times (using a JAFET standard detergent) in accordance with JIS L027 103, and after that, a test for antibacterial properties was carried out in accordance with a JIS L1902 quantitative test (standardized testing method). As a result, it was found that the activity value of bacteriostasis was 2.0, and excellent antibacterial and deodorizing performance was confirmed. Here, staphylococcus aureus ATCC 6538P was used as the test strain. Here, it is a well known fact that neither the laminated yarn of which the metal layer is made of aluminum nor the laminated yarn of which the metal layer is made of tin have antibacterial properties by themselves.

Here, fabrics that have been manufactured in accordance with a conventional method do not have such performance, and therefore, this performance is considered to result from the laminated yarn manufactured in (1). In addition, despite the fact that the cotton yarn, the polyester filament yarn, the synthetic resin film for forming the laminated yarn, aluminum and tin do not have antibacterial properties by themselves, antibacterial properties can be realized using laminated yarn containing two types of metals together. Therefore, it is considered that the above described antibacterial effects are gained because a conductive state is gained between the laminated yarns due to the existence of moisture that was provided in the test for antibacterial properties, and the difference in potential between the metals contained in these yarns provides a so-called battery system, and thus, a microscopic current flows.

### (4) Manufacture of Laminated Bodies

A sandwich structure manufactured in accordance with the same method as (1), except that the metal layers were made of silver, was pulverized to pieces of 0. 15 mm x 0. 15 mm, and thus, first laminated bodies containing silver and second laminated bodies containing aluminum were manufactured.

### (5) Manufacture of Printed Fabric

A mixture was prepared by mixing first laminated bodies and second laminated bodies into an adhesive that was formed so that the volume became four times greater than the original volume, and this mixture was screen printed in dot form on a span bonded unwoven cloth made of 100% polyester, and thus, a printed fabric (Example 2) of which the weight was the sum of the unwoven cloth, the adhesive and the laminated bodies was manufactured. Each of the first and second laminated bodies were contained in this fabric with a weight ratio of 2.5%. In addition, first laminated bodies and an adhesive were mixed into a span bonded unwoven cloth made of 100% polyester, and thus a first mixture was prepared, and separately, second laminated bodies and an adhesive were mixed into a span bonded unwoven cloth made of 100% polyester, and thus a second mixture as prepared. Then, the first mixture and the second mixture were screen printed in such a manner that columns of dots made of the first mixture and columns of dots made of the second mixture were arranged alternately, and thus, a printed fabric (Example 3) was manufactured. Each of the first and second laminated bodies was included in this fabric with a ratio of 2.5% of the total weight.

Furthermore, a mixture was prepared by mixing first laminated bodies into an adhesive that was formed so that the volume became four times greater than the original volume, and this mixture was screen printed in dot form on a span bonded unwoven cloth made of 100% polyester, and thus, a printed fabric (Comparative Example 1) was manufactured. The first laminated bodies were included in this fabric with a ratio of 3% of the total weight.

### (6) Test for Anti-Molding Properties

A test for anti-molding properties was carried out on Example 2, Example 3 and Comparative Example 1 manufactured in (5) in accordance with the testing/wet system method of JIS Z2911 fiber testing. Here, a suspension of mixed spores from four strains: Aspergillus niger ATCC 6275, Penicillium citrinum ATCC 9849, Chaetomium globosum ATCC 6205 and Myrothecium verrucaria ATCC 9095, was used as the strains for testing which were cultured for 14 days at 28°C ± 2°C.

As a result, growth of mold was observed in Comparative Example after 14 days had passed, while growth of mold was not observed at all in Examples 2 and 3 after 14 days had passed.

Here, it is common scientific knowledge that aluminum, synthetic resin films and adhesives do not have antibacterial properties or anti-molding properties, and it is clear that antibacterial properties/anti-molding properties are lowered when the amount of laminated bodies which include silver having antibacterial properties/anti-molding properties is reduced. In spite of this, antibacterial properties/anti-molding properties are clearly enhanced in Examples 2 and 3. This is considered to be because the difference in potential between the two types of metals that form the laminated bodies provides a so-called battery system, causing a microscopic current to flow, in addition to the antibacterial properties/anti-molding properties of silver.

Here, this invention is not limited to the above described embodiments and examples, and can be modified in a variety of manners within the technical scope of the claims.

First, though the applications of fabrics A and B are not particularly described in the above described embodiments, the invention can be used for clothing, for example underwear, undergarments, socks, a variety of shirts, stomach warmers and pajamas, bedclothes, for example sheets, futon covers, blankets and pillow covers, daily goods, such as dishtowels and towels, materials for the house, such as curtains, carpets, wallpaper, ceiling materials and floor materials.

In addition, though in the above described embodiments, fabrics A and B are plain fabric and unwoven cloth, respectively, in addition to these, fabrics manufactured as sheeting weave, twill weave, satin weave and leno weave, knit manufactured as tricot, raschel, milanese, and weft and circular knit, and furthermore, textiles manufactured in accordance with the Karl Mayer's method may be used.

Furthermore, laminated yarn may be used alone, and in addition, may be used as a material for twisted yarn, or so-called core yarn may be made, in which laminated yarn is used as a core and natural fibers or synthetic fibers are used as a sheath. In addition, laminated bodies are gained by pasting a layer to a fabric using an adhesive as in the above described embodiments, and in addition, an adhesive layer made of a synthetic resin of which the melt point is lower than that of synthetic resin films 5a and 5b is provided on the outside of these synthetic resin films 5a and 5b, and this adhesive layer is melted through thermal pressing, and thus, the laminated bodies may be pressed against the resin film so as to adhere to the film. In addition, laminated yarn or laminated bodies having three or more different types of metal as the metal that forms the metal layer may be used as a component of fabrics and fiber products.

### Industrial Applicability

Fabric and fiber products according to this invention include a number of types of laminated yarn and laminated bodies made of metal layers sandwiched between synthetic resin films as a component. In addition, the metal layers that form these laminated yarns and laminated bodies are made of metals of different types which provide a difference in potential.

Therefore, there is a difference in potential within laminated yarn or laminated bodies which include different types of metals, that is to say, a so-called battery system is provided and a microscopic current flows, and thereby, insect repelling effects/anti-molding effects/antibacterial effects/ effects of generating minus ions and effects of decomposing/detoxifying harmful substances resulting from electrolysis are gained.

In addition, the metal layers are protected by synthetic resin films, and the exposed surface is rubbed, and therefore, none of the various effects, including insect repelling effects/antibacterial effects/anti-molding effects and effects of generating minus ions, are lost, and the metal layers do not blacken and make the appearance of laminated yarn, laminated bodies and fabric and fiber products which have these as a component poor, even when the fabric and the fiber products which have laminated yarn and laminated bodies as a component are repeatedly washed or a bleacher is used.

## Claims

1. Fabric, **characterized by** including as a portion of raw yarn
first laminated yarn formed by manufacturing a sandwich structure where a metal layer is vapor deposited on one surface of synthetic resin films and said synthetic resin films on which a metal layer has been vapor deposited are bonded together in such a manner that the metal layers face the inside, and cutting said sandwich structure into yarn, and
second laminated yarn formed by manufacturing a sandwich structure where a metal layer having a potential that is different from that of the metal that forms the metal layer of said first laminated yarn is vapor deposited on one surface of synthetic resin films and said synthetic resin films on which a metal layer has been vapor deposited are bonded together in such a manner that the metal layers face the inside, and cutting said sandwich structure into yarn.

2. The fabric according to claim 1, **characterized in that** said first laminated yarn and said second laminated yarn are arranged alternately.

3. Fabric, **characterized in that**
first laminated bodies formed by manufacturing a sandwich structure where a metal layer is vapor deposited on one surface of synthetic resin films and said synthetic resin films on which a metal layer has been vapor deposited are bonded together in such a manner that the metal layers face the inside, and pulverizing said sandwich structure to pieces, and
second laminated bodies formed by manufacturing a sandwich structure where a metal layer of metal having a potential that is different from that of the metal that forms the metal layer of said first laminated bodies is vapor deposited on one surface of synthetic resin films and said synthetic resin films on which a metal layer has been vapor deposited are bonded together in such a manner that the metal layers face the inside, and pulverizing said sandwich structure to pieces
are attached to raw yarn.

4. A fiber product, **characterized in that** the fabric according to any of Claims 1, 2 and 3 is used as a portion of the material.
